(19) **Europäisches Patentamt / European Patent Office / Office européen des brevets**

(11) **EP 2 584 851 A1**

(12) ## EUROPEAN PATENT APPLICATION
published in accordance with Art. 153(4) EPC

(43) Date of publication:
**24.04.2013 Bulletin 2013/17**

(21) Application number: **11798044.1**

(22) Date of filing: **16.06.2011**

(51) Int Cl.:
*H04W 72/04* (2009.01)    *H04W 84/10* (2009.01)
*H04W 92/20* (2009.01)

(86) International application number:
**PCT/JP2011/063810**

(87) International publication number:
**WO 2011/162159 (29.12.2011 Gazette 2011/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2010 JP 2010141064**

(71) Applicant: **NTT DOCOMO, INC.**
**Chiyoda-ku**
**Tokyo**
**100-6150 (JP)**

(72) Inventors:
• **ABE, Tetsushi**
**Tokyo 100-6150 (JP)**

• **MIKI, Nobuhiko**
**Tokyo 100-6150 (JP)**
• **BHARUCHA, Zubin**
**Tokyo 100-6150 (JP)**
• **GUNTHER, Auer**
**Tokyo 100-6150 (JP)**

(74) Representative: **HOFFMANN EITLE**
**Patent- und Rechtsanwälte**
**Arabellastrasse 4**
**81925 München (DE)**

(54) **BASE STATION DEVICE, MOBILE TERMINAL DEVICE, AND COMMUNICATION CONTROL METHOD**

(57)    The present invention provides a base station apparatus, a mobile terminal apparatus and a communication control method that support a next-generation mobile communication system and are capable of controlling in an adaptive manner to interference in a heterogeneous network. Provided is a room base station apparatus (30) that covers a femto cell (C2) and shares at least a part of frequency band with a base station apparatus (20) that covers a macro cell (C1), the room base station apparatus (30) comprising: a detecting section (311) configured to detect an unconnected mobile terminal apparatus (10) in the femto cell; an obtaining section (312) configured to obtain resource identification information for identifying a resource of a PDCCH for the unconnected mobile terminal apparatus (10) in the base station apparatus (20); and a blank resource setting section (313) configured to set a resource identified by the resource identification information to be a blank resource.

FIG. 15

**Description**

TECHNICAL FIELD

The present invention relates to a base station apparatus, a mobile terminal apparatus and a communication control method in a next-generation mobile communication system.

BACKGROUND ART

In a UMTS (Universal Mobile Telecommunications System) network, for the purposes of improving spectral efficiency and improving the data rates, system features based on W-CDMA (Wideband Code Division Multiple Access) are maximized by adopting HSDPA (High Speed Downlink Packet Access) and HSUPA (High Speed Uplink Packet Access). For this UMTS network, for the purposes of further increasing high-speed data rates, providing low delay and so on, long term evolution (LTE) has been under study (see, for example, Non-Patent Literature 1). In the LTE system, as a multiplexing method, OFDMA (Orthogonal Frequency Division Multiple Access) which is different from W-CDMA is employed for the downlink and SC-FDMA (Single Carrier Frequency Division Multiple Access) is employed for the uplink.
In a third-generation system, it is possible to achieve a transmission rate of maximum approximately 2 Mbps on the downlink by using a fixed band of approximately 5 MHz. Meanwhile, in the LTE system, it is possible to achieve a transmission rate of about maximum 300 Mbps on the downlink and about 75 Mbps on the uplink by using a variable band which ranges from 1.4 MHz to 20 MHz. Furthermore, in the UMTS network, for the purpose of achieving further broadbandization and higher speed, successor systems to LTE have been under study (for example, LTE Advanced (LTE-A)). In the LTE-A system (LTE Release 10), a heterogeneous network configuration has been under study, placing importance on a local area environment as well as a conventional cellar environment.

CITATION LIST

NON-PATENT LITERATURE

    Non-Patent Literature 1: 3GPP, TR25.912 (V7.1.0), "Feasibility study for Evolved UTRA and UTRAN", Sept. 2006

SUMMARY OF THE INVENTION

TECHNICAL PROBLEM

The above-described heterogeneous network is a hierarchical network where large cells and small cells overlay one on another. In this heterogeneous network, if a mobile terminal apparatus inside a small cell is connected to a large cell but is not handed over to the small cell, the mobile terminal apparatus suffers from interference from the small cell problematically.
The present invention was carried out in view of the foregoing and aims to provide a base station apparatus, a mobile terminal apparatus and a communication control method that support next generation mobile communication systems and are capable of performing control in an adaptive manner for interference inside the heterogeneous network and also of.

SOLUTION TO PROBLEM

The present invention provides a base station apparatus that covers a small cell and shares at least a part of frequency band with another base station apparatus that covers a large cell, the base station apparatus comprising: a detecting section configured to detect an unconnected mobile terminal apparatus in the small cell; an obtaining section configured to obtain resource identification information for identifying a resource of a downlink control channel for the unconnected mobile terminal apparatus in the other base station apparatus; and a blank resource setting section configured to set a resource identified by the resource identification information to be a blank resource.

TECHNICAL ADVANTAGE OF THE INVENTION

According to the present invention, as the blank resource is set in the base station apparatus of the small cell in consideration of the resource of the downlink control channel in the other base station apparatus of the large cell, it is possible to prevent the mobile terminal apparatus from suffering from interference from the small cell when receiving the downlink control information. In this way, it is possible to allow the mobile terminal apparatus and the base station apparatus of the small cell to make control in an adaptive manner to the interference in the heterogeneous network.

BRIEF DESCRIPTION OF THE DRAWINGS

Fig. 1 is a diagram for explaining an overview of communication control processing according to a comparative example;
Fig. 2 is a diagram for explaining interference suppression of downlink data channels according to the comparative example;
Fig. 3 is a diagram for explaining an interference state of downlink control channels according to the comparative example;
Fig. 4 is a diagram for explaining an overview of communication control processing according to a present embodiment;
Fig. 5 is a diagram for illustrating resource arrangement of aroombase stationapparatus and a base station apparatus according to the present embodiment;
Fig. 6 provides diagrams for explaining examples of the method for setting a blank resource according to the present embodiment;
Fig. 7 is a diagram for illustrating another resource arrangement of the room base station apparatus and the base station apparatus according to the present embodiment;
Fig. 8 is a sequence view illustrating an example of the flow of the communication control processing according to the present embodiment;
Fig. 9 is a sequence view illustrating another example of the flow of the communication control processing according to the present embodiment;
Fig. 10 is a diagram for explaining a configuration of a radio communication system;
Fig. 11 is a diagram for explaining an overall configuration of a mobile terminal apparatus;
Fig. 12 is a diagram for explaining an overall configuration of a base station apparatus;
Fig. 13 is a diagram for explaining functional blocks of the communication control processing by the mobile terminal apparatus;
Fig. 14 is a diagram for explaining functional blocks of the communication control processing by the base station apparatus; and
Fig. 15 is a diagram of functional blocks of the communication control processing by the room base station apparatus.

DESCRIPTION OF EMBODIMENTS

In the LTE-A system, the heterogeneous network (hereinafter referred to as "Het Net") configuration is now under study placing importance on the local area environment. Het Net is configured, for example, by arranging a home base station apparatus (Home eNodeB) for a femto cell having a smaller cell radius (small cell) in an indoor facility such as home or office, in addition to a base station apparatus (Evolved NodeB) for a macro cell having a larger cell radius (large cell).

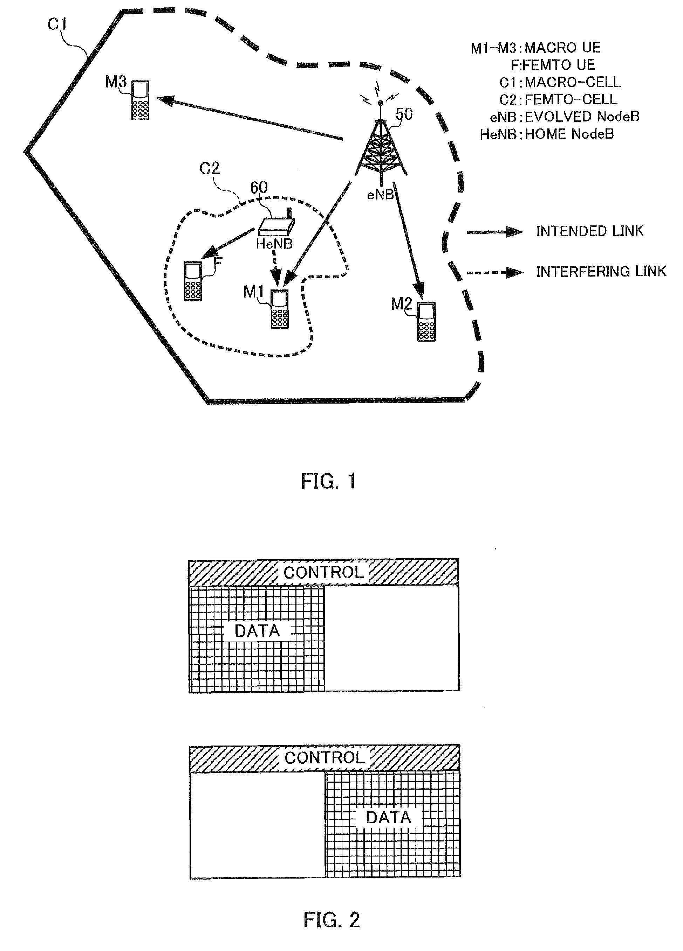

In 3GPP (3rd Generation Partnership Project), a CSG (Closed Subscriber Group) is sometimes formed as a room base station apparatus for permitting access to specific users. As illustrated in Fig. 1, a room base station apparatus 60 that forms the CSG is a base station apparatus to which only a registered mobile terminal apparatus F is permitted to access and accordingly, an unregistered mobile terminal apparatus M1 in the femto cell C2 is not connected to the room base station apparatus 60. Therefore, the mobile terminal apparatus M1 in the femto cell C2 is not handed over from the macro cell C1 to the femto cell C2 and suffers from interference from downlink radio signals of the femto cell C2.

In this case, as illustrated in Fig. 2, as to a downlink data channel (PDSCH: Physical Downlink Shared CHannel) shared by mobile terminal apparatuses, it is considered to be used by a base station apparatus 50 and the room base station apparatus 60 with mutually different frequency bands. With this structure, the mobile terminal apparatus M1 can receive user data on the downlink data channel without suffering from interference from the femto cell C2.

In the meantime, in the downlink control channel (PDCCH: Physical Downlink Control CHannel), in order to achieve a frequency diversity effect, there are used subcarriers distributed to the entire frequency band. Therefore, it is difficult for the base station apparatus 50 and the room base station apparatus 60 to use the PDCCH with the different frequency bands and the mobile terminal apparatus M1 cannot evade interference from the femto cell C2.

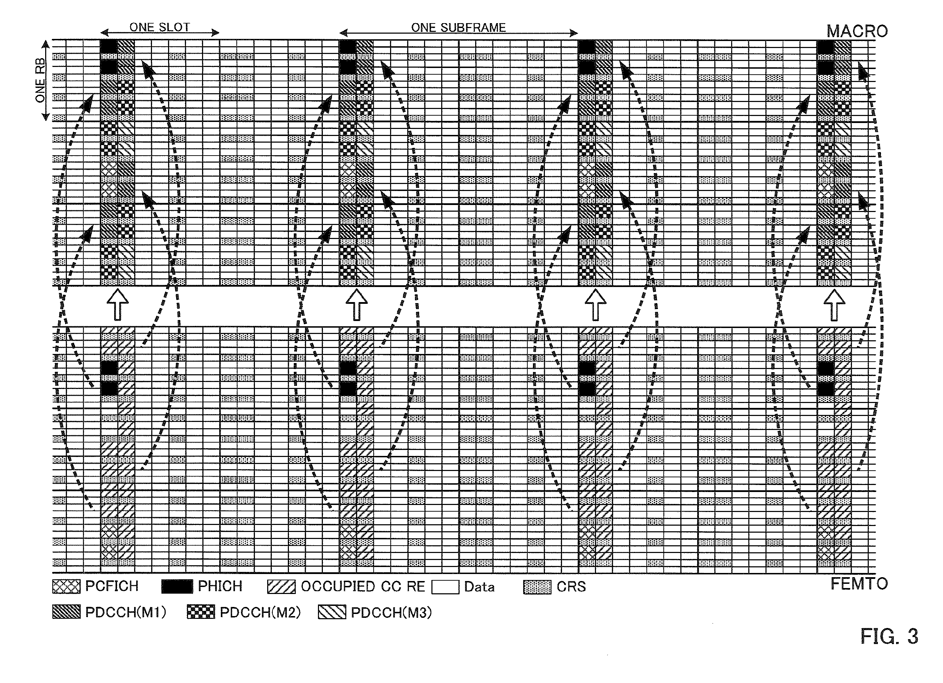

As illustrated in Fig. 3, the downlink control channels for the mobile terminal apparatuses M1 to M3 connected to the macro cell C1 are assigned to first two symbols of respective subframes in such a manner that the downlink control channels for the mobile terminal apparatuses M1 to M3 are shifted from each other in the frequency domain. In the symbols to which the downlink control channels are assigned, Hybrid-ARQ notification channel (PHICH: Physical Hybrid-ARQ Indicator Channel) and control format notification channel (PCFICH: Physical Control Format Indicator CHannel) are also assigned to predetermined positions in the frequency domain.

The PDCCH in the femto cell C2 is assigned to first two symbols of each subframe, together with the PHICH and the PCFICH, like in the macro cell C1. Accordingly, the PDCCH to the mobile terminal apparatus M1 in the macro cell C1 suffers from interference by the PDCCH, PHICH and PCFICH of the femto cell C2, problematically.

Then, in order to solve the above-mentioned problem, the present inventors carried out the present invention. That is, the gist of the present invention is registering a mobile terminal apparatus hypothetically or virtually to a room base station apparatus of the femto cell C2 and setting a PDCCH resource out of PDCCH resources for this virtual mobile terminal apparatus that may cause interference to the unregistered mobile terminal apparatus M1 to be a blank resource.

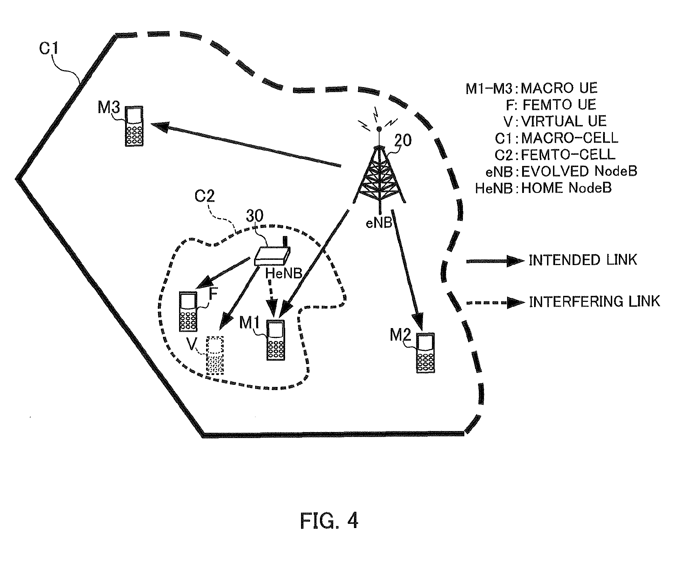

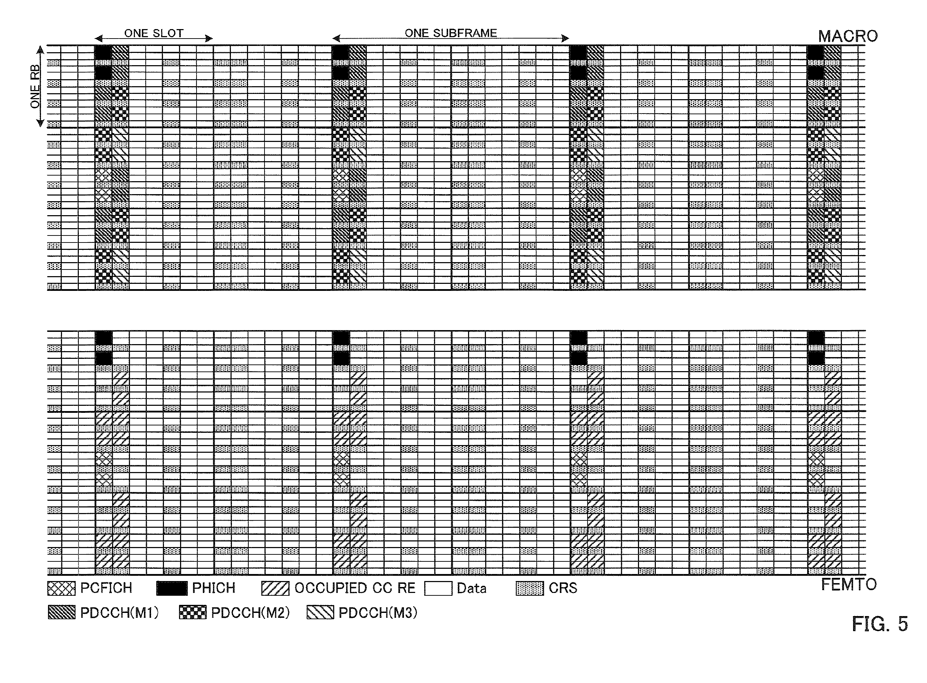

In the following, with reference to the accompanying drawings, the embodiment of the present invention will be described in terms of interference suppression control for an unconnected mobile terminal apparatus in the femto cell. Fig. 4 is an explanatory view of the summary of the communication control processing according to the embodiment of the present invention. Fig. 5 is a diagram for explaining the arrangement of resources of the base station apparatus and the room base station apparatus according to the present embodiment. The following description is made by way of example of the Het Net where the macro cell and the femto cell are hierarchized. However, this is by no means limiting and for example, the present invention may be applicable to the Het Net where the macro cell is hierarchized with a pico cell and a micro cell.

As illustrated in Fig. 4, mobile terminal apparatuses M1 to M3 in the macro cell C1 are connected to the base station apparatus 20. The mobile terminal apparatus M1 in the femto cell C2 is not connected to the room base station apparatus 30 and only a mobile terminal apparatus F is connected to the room base station apparatus 30. In the room base station apparatus 30 in the femto cell C2, a mobile terminal apparatus V is registered virtually as well as the access-permitted mobile terminal apparatus F in the CSG list called "white list".

The virtual mobile terminal apparatus V is used for the room base station apparatus 30 to set a blank resource for the PDCCH as if the virtual mobile terminal apparatus V exists in the femto cell C2. The room base station apparatus 30 suppresses interference to the PDCCH of the mobile terminal apparatus M1 by setting the PDCCH for the virtual mobile terminal apparatus V to be a blank resource. In other words, in the room base station apparatus 30, the PDCCH resource of the mobile terminal apparatus V is set to be a blank resource so as to correspond to the PDCCH of the mobile terminal apparatus M1 in the base station apparatus 20.

Besides, the room base station apparatus 30 uses the same cell ID (PCI: Physical Cell ID) as the base station apparatus 20. This is in order to match the cell ID-dependent interleaving pattern and the position of the CRS (Common Reference Signal) between them. Here, it is also possible to match the interleaving pattern and the CRS position even with different cell IDs.

With this structure, as illustrated in Fig. 5, it is possible to prevent interference of the PDCCH for the mobile terminal apparatus M1. Specifically, the femto cell C2, the resource corresponding to the PDCCH for the mobile terminal apparatus M1 of the macro cell C1 is set to be a blank resource. Therefore, the interference of the PDCCH for the mobile terminal apparatus M1 of the macro cell C1 is prevented by the femto cell C2. Here, the blank resource may be a resource to which no data is assigned or defined as a resource to which data is assigned as far as no interference is caused to the radio frames of the macro cell. Further, the blank resource may be defined as a resource that is transmitted with specified transmission power or less.

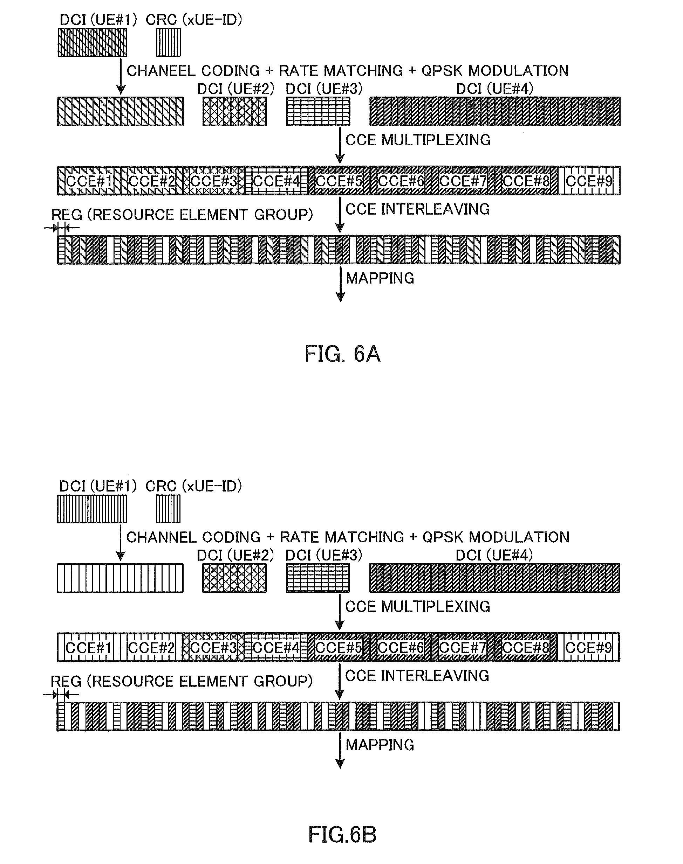

In order to match the blank resource with the PDCCH resource for the mobile terminal apparatus M1 of the macro cell C1, the room base station apparatus 30 needs to obtain resource identification information for identifying the PDCCH resource. Here, description is made, with reference to Fig. 6, about the blank resource setting method based on the resource identification information. Fig. 6 provides diagrams for explaining examples of the blank resource setting method according to an embodiment of the present invention.

As illustrated in Fig. 6A, the downlink control information (DCI) transmitted by the PDCCH is added with a CRC (Cyclic Redundancy Check) on a per-user basis and subjected to various processing such as channel coding, RATE matching and QPSK modulation. Next, the downlink control information pieces for the respective users UE #1 to UE #4 are multiplexed on a per-CCE (Control Channel Element) basis. One CCE is composed of 9 REGs (Resource Element Groups). And, the CCE aggregation level (aggregation number) is specified as 1, 2, 4 or 8.

Next, the CCE #1 to CCE #9 are interleaved with use of the interleaving pattern. Then, the PDCCH is distributed to the entire frequency band on a per-REG basis. Accordingly, in order to specify the PDCCH resource for a specific user, it is necessary to specify the position (CCE) of the user before interleaving. In the room base station apparatus 30, in order to specify the resource corresponding to the PDCCH of the mobile terminal apparatus M1, the CCE of the mobile terminal apparatus M1 is specified before interleaving. As illustrated in Fig. 6B, when specifying the CCE of the mobile terminal apparatus M1 before interleaving in the base station apparatus 20, the base station apparatus 30 sets its own CCE corresponding to the CCE of the base station apparatus 20 to be a blank and performs interleaving. In this way, in the femto cell C2, the resource corresponding to the PDCCH of the mobile terminal apparatus M1 of the macro cell C1 is set to be a blank resource.

The CCE in the mobile terminal apparatus M1 is obtained by the following equation (2) in the room base station apparatus 30.

(Equation 2)

$$L\left\{(Y_k + m) \mod \lfloor N_{\mathrm{CCE},k}/L \rfloor\right\} + i \quad \cdots (2)$$

$$L \in \{1, 2, 4, 8\} \qquad Y_k = (AY_{-1}) \mod D \qquad m = 0, \cdots, M^{(L)-1}$$

$$A = 39827 \qquad D = 65537$$

$i$=0, ..., $L$-1 $N_{CCE,k}$ is the total number of CCEs in control region of subframe $k$ $M^{(L)}$ is the number of PDCCH candidates to monitor in a given search space given by Table 9.1.1-1 (TS 36.213) $Y_{-1}$ is the RNTI value assigned to the UE In the above-mentioned equation 2, L denotes the aggregation level, $N_{CCE,K}$ denotes the number of resource elements used in PDCCH, $Y_{-1}$ denotes terminal identification information (UE-ID, RNTI: Radio Network Temporary Identifier), and m denotes the number of PDCCH candidates (PDCCH index). Here, the number of PDCCH candidates varies in accordance with the aggregation level and, for example, at L = 1, the number of candidates is six including "0" to "5". Accordingly, at L = 1, six calculation results are obtained. This means that any one of the consecutive six CCEs obtained by the equation (2) is a CCE of the mobile terminal apparatus M1.

The room base station apparatus 30 obtains, as the resource identification information, the UE-ID of the mobile terminal apparatus M1 and the number of resource elements used in the PDCCH from the base station apparatus 20. The room base station apparatus 30 uses this information to calculate a first resource of the CCE of the PDCCH of the mobile terminal apparatus M1 and sets the CCE of the PDCCH to be blank. At this time, as the first resource of the CCE of the PDCCH is obtained by calculation for each of all kinds of the number of PDCCH candidates and aggregation levels, the number of blank resources set is greater than required.

In order to obtain a CCE of the PDCCH of the mobile terminal apparatus M1 more accurately, the room base station apparatus 30 may obtain, as the resource identification information, the aggregation level and the number of PDCCH candidates from the base station apparatus 20. With this configuration, it is possible to reduce the number of blank resources set by the room base station apparatus 30 and to make effective use of the radio resources.

Further, the number of PDCCH candidates varies on a subframe basis. Therefore, the room base station apparatus 30 needs to communicate with the base station apparatus 20 on a subframe basis when obtaining the number of PDCCH candidates from the base station apparatus 20. Therefore, if the base station apparatus 20 notifies the room base station apparatus 30 in advance that a PDCCH candidate of the odd-number is used, there is no need to communicate on a subframe basis and it is possible to make effective use of radio resources. Further, the simplest method is a method of notifying the candidate of specific resource elements (position information) used in the PDCCH of the mobile terminal apparatus M1 without the base station apparatus 20 notifying the room base station apparatus 30 of the UE-ID. With this method, it is possible for the room base station apparatus 30 to assign the PDCCH to resource elements other than the specified resource elements.

And, the room base station apparatus 30 performs interleaving with use of the same interleaving pattern as that of the base station apparatus 20. With this method, the blank resource of the femto cell C2 is matched with the PDCCH resource for the mobile terminal apparatus M1 of the macro cell C1. The interleaving pattern depends on the cell ID as described above. The cell ID may be obtained from the base station apparatus 20 by the room base station apparatus 30 or the same cell ID as the base station apparatus 20 may be set in advance in the room base station apparatus 30.

Here, the room base station apparatus 30 may be configured to obtain the resource identification information by receiving a radio signal from the base station apparatus 20 or by receiving notification from the base station apparatus 20. Besides, the room base station apparatus 30 may be configured to obtain the resource identification information from the base station apparatus 20 with use of the handover procedure.

Besides, the room base station apparatus 30 may be configured to obtain the PHICH parameter (response resource identification information) of the base station apparatus 20. The room base station apparatus 30 may identify the resource with use of the PHICH parameter and set the PHICH at the same position as that of the base station apparatus 20. Or, it may be also possible to prevent interference between the PHICH of the room base station apparatus 30 and the PHICH of the base station apparatus 20.

Further, the room base station apparatus 30 may obtain the control information transmitted by the PCFICH of the base station apparatus 20. The room base station apparatus 30 may specify the number of symbols used in the PDCCH from the control information of the PCFICH and obtain a CCE of the PDCCH of the mobile terminal apparatus M1 more accurately in accordance with the resource block configuration of the macro cell C1.

Here, the room base station apparatus 30 may obtain the control information of the PCFICH and the parameter of the PHICH by receiving a radio signal from the base station apparatus 20 or by receiving notification from the base station apparatus 20.

In the above-mentioned blank resource setting method, as the same cell ID is used in the room base station apparatus 30 and the base station apparatus 20, as illustrated in Fig. 5, the CRS and PCFICH resources of the femto cell C2 are matched with those of the macro cell C1. And, the PHICH resources may be matched by the above-mentioned method. In this case, interference between CRSs, between PHICHs and between PCFICHs cannot be prevented by the above-mentioned method. Accordingly, the room base station apparatus 30 uses a cell ID which is different from that of the base station apparatus 20 in order to prevent interference of the CRSs and the like. With this structure, the room base station apparatus 30 shifts the resources of the CRSs and the like in the frequency domain thereby to prevent interference of the CRS resources and the like.

And, as the interleaving pattern depends on the cell ID, the different patterns are used in the room base station apparatus 30 and the base station apparatus 20. In this case, the room base station apparatus 30 sets the blank resource in consideration of difference from the interleaving pattern used in the base station apparatus 20. With this setting of a blank resource, it is possible to match the PDCCH resource for the mobile terminal apparatus M1 of the macro cell C1 with the blank resource of the femto cell C2 even using different interleaving patterns.

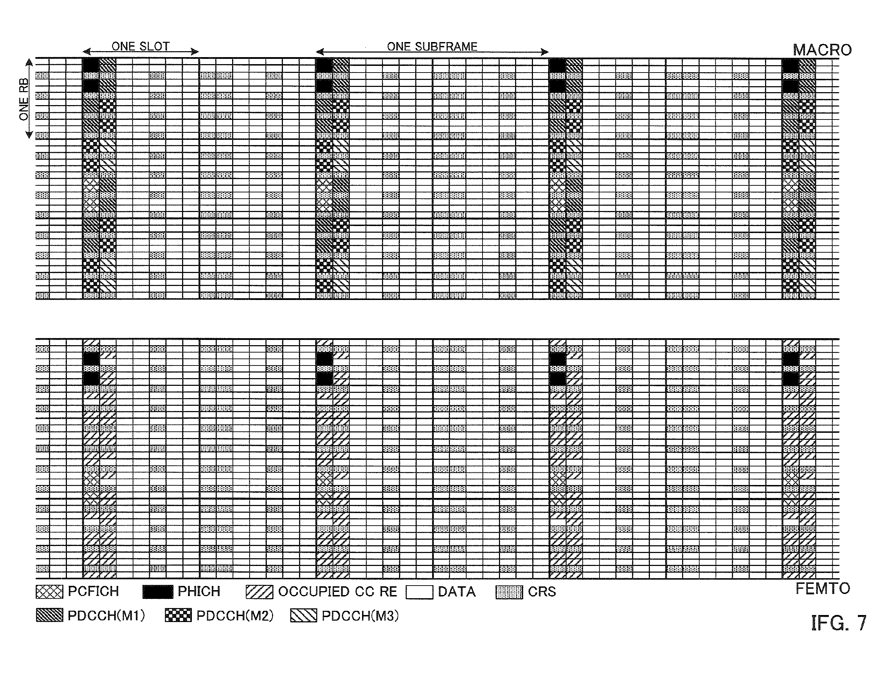

Then, as illustrated in Fig. 7, in the femto cell C2 and the macro cell C1, the CRSs and the like are shifted in the frequency domain. As the blank resources are not set in the CRSs and the like, the blank resources are not fully matched with the PDCCH for the mobile terminal apparatus M1 of the macro cell C1. However, the blank resources are partially matched with the PDCCH of the mobile terminal apparatus M1 of the macro cell C1, it is possible to prevent the interference of the PDCCH partially while preventing interference by the CRSs and the like. In this way, there is a tradeoff relationship between the interference suppression control of the CRS and the like and the interference suppression control of the PDCCH.

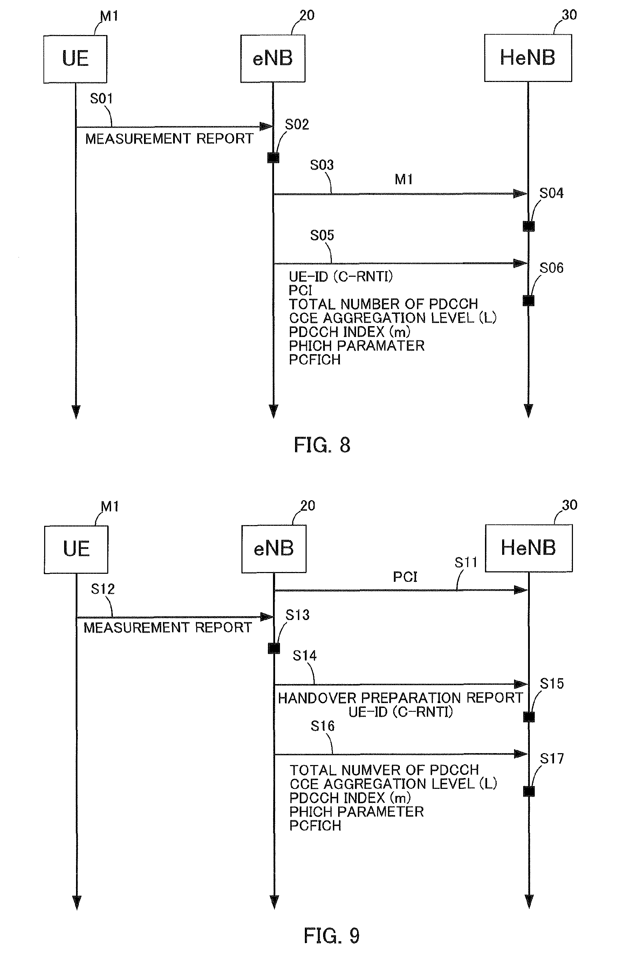

Here, with reference to Fig. 8, description is made about an example of the flow of the communication control processing. Fig. 8 is a sequence diagram for illustrating an example of the flow of the communication control processing according to the present embodiment.

As illustrated in Fig. 8, when approaching the room base station apparatus 30 inside the femto cell C2, the mobile terminal apparatus M1 connected to the macro cell C1 sends a measurement report to the base station apparatus 20 of the macro cell C1 (step S01). In this case, for example, when the radio field intensity from the room base station apparatus 30 is larger than the radio field intensity from the base station apparatus 20, the mobile terminal apparatus M1 sends the measurement report. Next, receiving the measurement report, the base station apparatus 20 detects the unconnected mobile terminal apparatus M1 inside the femto cell C2 (step S02).

Next, the base station apparatus 20 notifies the room base station apparatus 30 of the mobile terminal apparatus M1 in the femto cell C2 (step S03). Next, the room base station apparatus 30 detects the mobile terminal apparatus M1 as being unregistered (unconnected) , with reference to the white list (step S04). Then, the room base station apparatus 30 obtains resource identification information for identifying PDCCH resource for the mobile terminal apparatus M1 from the base station apparatus 20 (step S05). The resource identification information contains the UE-ID of the mobile terminal apparatus M1 and the number of resource elements used in the PDCCH. More precisely, in order to specify the PDCCH resource, the resource identification information may include, in addition to the UE-ID and number of resource elements, aggregation level and the number of PDCCH candidates.

Besides, the room base station apparatus 30 may obtain, in addition to the resource identification information, the PHICH parameter, PCFICH control information and cell ID from the base station apparatus 20. Further, if the same cell ID as the base station apparatus 20 is not set in advance or if an interleaving pattern that is different from that of the base station apparatus 20 is used, the room base station apparatus 30 may obtain the cell ID from the base station apparatus 20.

Next, the room base station apparatus 30 sets the resource indicated by the resource identification information to a blank resource for the virtual mobile terminal apparatus V registered in the white list (step S06). Then, the room base station apparatus 30 uses the above-mentioned equation (2) and the resource identification information to specify the CCE of the mobile terminal apparatus M1 before interleaving in the base station apparatus 20. Then, the room base station apparatus 30 sets the CCE before interleaving of the mobile terminal apparatus V to be a blank resource based on the specified CCE and performs interleaving with use of the interleaving pattern.

Here, interleaving may be performed with use of the same interleaving pattern as described above or a different interleaving pattern. If the blank resource is set with use of the same interleaving pattern, it is possible to suppress interference with the PDCCH of the mobile terminal apparatus M1 in an effective manner.

If the blank resource is set with use of a different interleaving pattern, it is possible to suppress interference between CRSs, between PHICHs and between PCFICHs and also to suppress interference of the PDCCHs partially.

With reference to Fig. 9, description is made about another example of the flow of the communication control processing. Fig. 9 is a sequence diagram for illustrating another example of the flow of the communication control processing according to the present embodiment. Here, the following example is an example where the room base station apparatus obtains the UE-ID from the base station apparatus by the handover procedure.

As illustrated in Fig. 9, the room base station apparatus 30 obtains a cell ID from the base station apparatus 20 by receiving notification from the base station apparatus 20 or receiving a radio signal from the base station apparatus 20 (step S11). Then, when approaching the room base station apparatus 30 in the femto cell C2, the mobile terminal apparatus M1 connected to the macro cell C1 sends a measurement report to the base station apparatus 20 of the macro cell C1 (step S12). Next, upon receiving the measurement report, the base station apparatus 20 detects the unconnected mobile terminal apparatus M1 in the femto cell C2 (step S13).

Then, the base station apparatus 20 notifies the room base station apparatus 30 of a handover preparation signal containing the UE-ID as the resource identification information (step S14). Next, the room base station apparatus 30 detects the mobile terminal apparatus M1 as being unregistered (unconnected) with reference to the white list (step S15). In the next step, the room base station apparatus 30 obtains the number of resource elements used in the PDCCH as the resource identification information from the base station apparatus 20 (step S16). Then, the room base station apparatus 30 may obtain the aggregation level, the number of PDCCH candidates, PHICH parameter, and PCFICH control information.

Next, the room base station apparatus 30 sets the resource indicated by the resource identification information to a blank resource for the virtual mobile terminal apparatus V registered in the white list (step S17). Then, the room base station apparatus 30 can set the blank resource with use of the same interleaving pattern or different interleaving pattern.

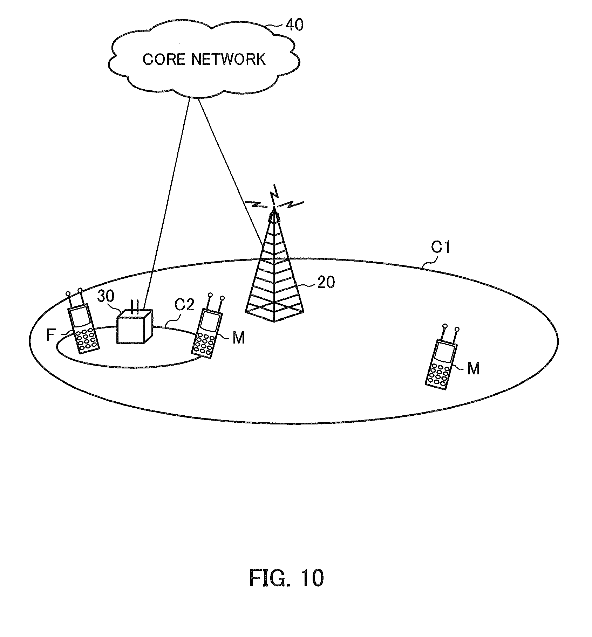

Here, description is made in detail about the configuration for realizing the interference suppressing method of the PDCCH as described above. Fig. 10 is an explanatory view of the system configuration of the radio communication system according to the present embodiment. Here, the radio communication system illustrated in Fig. 10 is, for example, an LTE system or a system including SUPER 3G. In this radio communication system, carrier aggregation is employed such that a plurality of fundamental frequency blocks are aggregated, each unit block corresponding to the system band of the LTE system. Besides, this radio communication system may be called IMT-Advanced or 4G.

As illustrated in Fig. 10, the radio communication system is Het Net and the hierarchical network is built up with the macro cell C1 and the femto cell C2. To the base station apparatus 20 of the macro cell C1, the mobile terminal apparatus M is connected. To the room base station apparatus 30 of the femto cell C2, the mobile terminal apparatus F is connected. The mobile terminal apparatus M inside the femto cell C2 is connected to the base station apparatus 20 and is not connected to the room base station apparatus 30. Further, the base station apparatus 20 and the room base station apparatus 30 are both connected to a higher station apparatus (not shown) and then, connected to the core network 40 via the higher station apparatus. Here, for convenience of explanation, it is assumed that it is the mobile terminal apparatuses that perform radio communications with the base station apparatus 20 and the room base station apparatus 30, but more generally, such a mobile terminal apparatus may be user equipment (UE) including a mobile terminal apparatus and a fixed terminal apparatus.

In the radio communication system, as radio access schemes, OFDMA (Orthogonal Frequency Division Multiple Access) is applied to the downlink, and SC-FDMA (Single-Carrier Frequency-Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single carrier transmission scheme to perform communications by dividing, per terminal, the system band into bands formed with one or continuous resource blocks , and allowing a plurality of terminals to use mutually different bands thereby to reduce interference between terminals.

Here, explanation is made about communication channels in the LTE system.

The downlink communication channel has a PDSCH which is a downlink data channel shared by mobile terminal apparatuses and a downlink L1/L2 control channel (PDCCH, PCFICH, PHICH). The PDSCH is used to send higher control information and user data. The PDCCH is used to send scheduling information of PUSCH and PDSCH and the like. The PCFICH is used to send the number of OFDM symbols used in the PDCCH. The PHICH is used to send ACK/NACK of HARQ (Hybrid Automatic Repeat reQuest) for the PUSCH.

The uplink control channel has a PUSCH (Physical Uplink Shared CHannel) which is an uplink data channel shared by mobile terminal apparatuses and a PUCCH (Physical Uplink Control CHannel) which is an uplink control channel. This PUSCH is used to send user data and higher control information. And, the PUCCH is used to send downlink radio quality information (CQI: Channel Quality Indicator), ACK/NACK and the like.

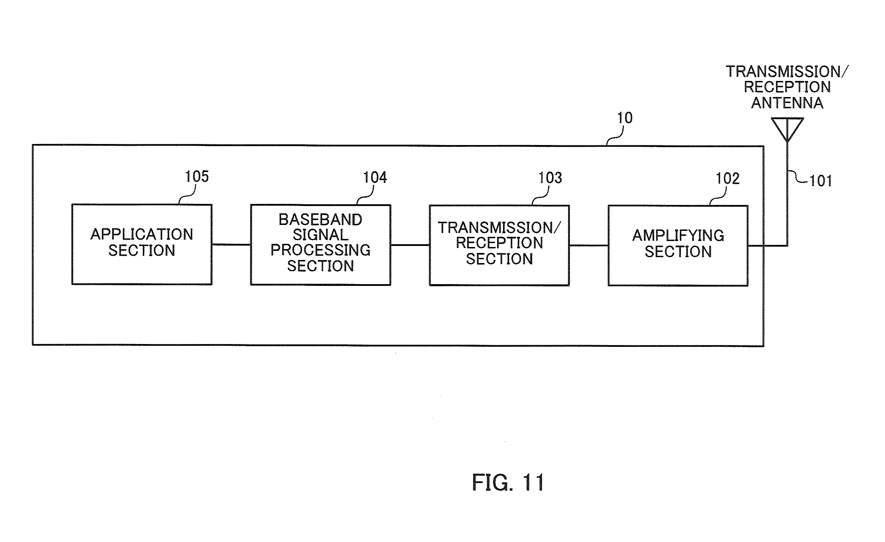

With reference to Fig. 11, description is made about the overall configuration of the mobile terminal apparatus according to the present embodiment. Here, the mobile terminal apparatus F connected to the femto cell and the mobile terminal apparatus M connected to the macro cell have the same configurations and are explained collectively as a mobile terminal apparatus 10. And, for convenience of explanation, the processing of a signal transmitted from the mobile terminal apparatus to the base station apparatus on the uplink is omitted here.

The mobile terminal apparatus 10 has a transmission/reception antenna 101, an amplifying section 102, a transmission/reception section 103, a baseband signal processing section 104, and an application section 105. Downlink transmission data is received by the transmission/reception antenna 101 as a radio frequency signal, which is amplified by the amplifying section 102. The signal is then subjected to frequency conversion by the transmission/reception section 103 and converted into a baseband signal.

This baseband signal is subjected to reception processing such as FFT processing, error correction decoding and retransmission control in the baseband signal processing section 104. In this downlink data, downlink user data is transferred to the application section 105. The application section 105 performs processing related to higher layers above the physical layer and the MAC layer. Also, in the downlink data, broadcast information is also transferred to the application section 105.

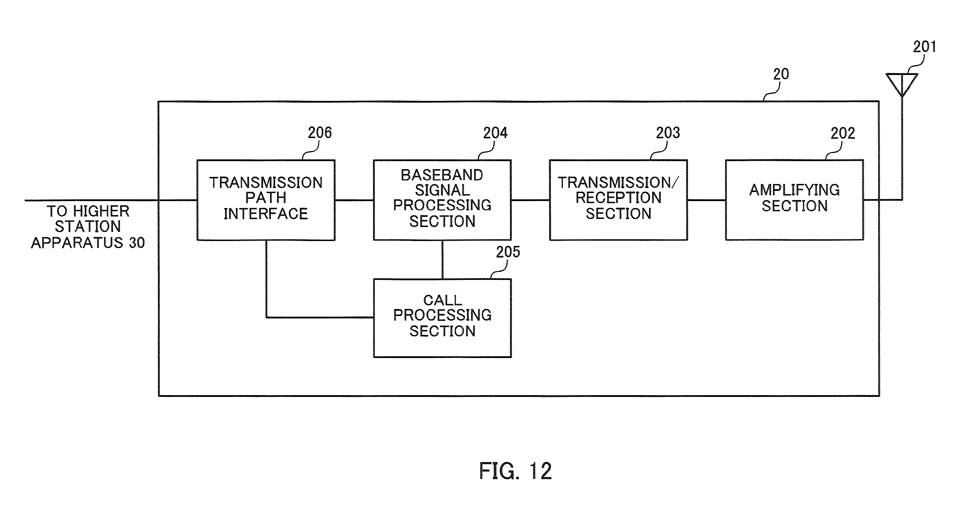

With reference to Fig. 12, description is made about the overall configuration of the base station apparatus covering the macro cell according to the present embodiment. Here, the base station apparatus covering the femto cell has the same configuration as the base station apparatus of the macro cell, and its explanation is omitted here. For convenience of explanation, the processing of a signal transmitted from the mobile terminal apparatus to the base station apparatus on the uplink is omitted here.

The base station apparatus 20 has a transmission/reception antenna 201, an amplifying section 202, a transmission/reception section 203, a baseband signal processing section 204, a call processing section 205, and a transmission path interface 206. User data that is transmitted on the downlink from the base station apparatus B1 to the mobile terminal apparatus UE is input into the baseband signal processing section 204, through the transmission path interface 206, from the higher station apparatus.

In the baseband signal processing section 204, a downlink data channel signal is subjected to PDCP layer processing, RLC (Radio Link Control) layer transmission processing such as RLC retransmission control transmission processing and division and coupling of user data, MAC (Medium Access Control) retransmission control, including, for example, HARQ transmission processing, scheduling, transport format selection, channel coding, inverse fast Fourier transform (IFFT) processing, and precoding processing. Furthermore, as with signals of the downlink control channel, transmission processing is performed, including channel coding and inverse fast Fourier transform.

Also, the baseband signal processing section 204 notifies the mobile terminal apparatuses connected to the same cell of control information for allowing each of the mobile terminal apparatuses 10 to communicate with the base station apparatus 20 by a broadcast channel. Broadcast information for communication in this cell includes, for example, the uplink or downlink system bandwidth, identification information of a root sequence (root sequence index) for generating random access preamble signals in the PRACH (Physical Random Access CHannel), and so on.

The transmission/reception section 203 performs frequency conversion into the radio frequency band on the baseband signal output from the baseband signal processing section 204. The amplifying section 202 amplifies the frequency-converted transmission signal and outputs it to the transmission/reception antenna 201.

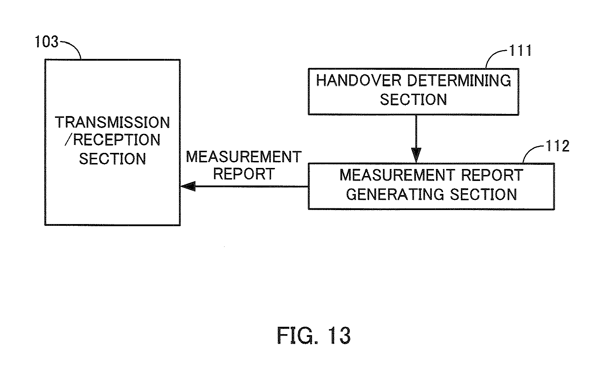

With reference to Fig. 13, description is made about functional blocks of the communication control processing by the mobile terminal apparatus according to the present embodiment. Fig. 13 is an explanatory diagram of the functional blocks of the communication control processing by the mobile terminal apparatus. Each of the functional blocks in Fig. 13 represents processing performed mainly by the baseband processing section. Here, the functional blocks shown in Fig. 13 are simplified for explanation of the present invention, and it should be understood that the baseband processing section is equipped with standard parts.

As illustrated in Fig. 13, the mobile terminal apparatus 10 has a handover determining section 111, a measurement report generating section 112 and the transmission/reception section 103. The handover determining section 111 determines whether the radio field intensity from the room base station apparatus 30 is greater than the radio field intensity from the base station apparatus 20 or not. When the radio field intensity from the room base station apparatus 30 is greater than the radio field intensity from the base station apparatus 20, the measurement report generating section 112 generates a measurement report. The transmission/reception section 103 performs transmission of the measurement report and reception of downlink control information from the base station apparatus 20.

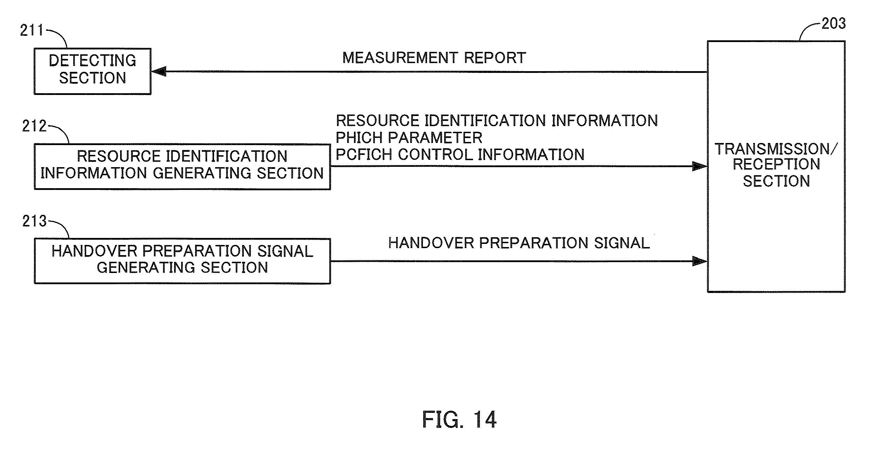

With reference to Fig. 14, description is made about functional blocks of the communication control processing by the base station apparatus according to the present embodiment. Fig. 14 is a diagram for explaining the functional blocks of the communication control processing by the base station apparatus. Each of the functional blocks in Fig. 14 represents processing performed mainly by the baseband processing section. Here, the functional blocks shown in Fig. 14 are simplified for explanation of the present invention, and it should be understood that the baseband processing section is equipped with standard parts.

As illustrated in Fig. 14, the base station apparatus 20 has a detecting section 211, a resource identification information generating section 212 and the transmission/reception section 203. The detecting section 211 detects the mobile terminal apparatus 10 which is not connected to the room base station apparatus 30 inside the femto cell C2 by the measurement report from the mobile terminal apparatus 10. The resource identification information generating section 212 generates resource identification information for identifying a PDCCH resource of the mobile terminal apparatus 10 detected by the detecting section 211, that is, UE-ID of the mobile terminal apparatus 10, the number of resource elements used in the PDCCH, the CCE aggregation level, the number of PDCCH candidates and the like. The resource identification information generating section 212 may also generates, in addition to the resource identification information, PHICH parameter and PCFICH control information.

The transmission/reception section 203 receives the resource identification information and the like generated by the resource identification information generating section 212 and transmits it to the room base station apparatus 30. Here, the room base station apparatus 30 may have a handover preparation signal generating section 213 for notifying the base station apparatus 20 of UE-ID as the resource identification information by the handover procedure. The handover preparation signal generating section 213 receives the measurement report from the mobile terminal apparatus 10 and generates a handover preparation signal containing the UE-ID of the mobile terminal apparatus 10 detected by the detecting section 211.

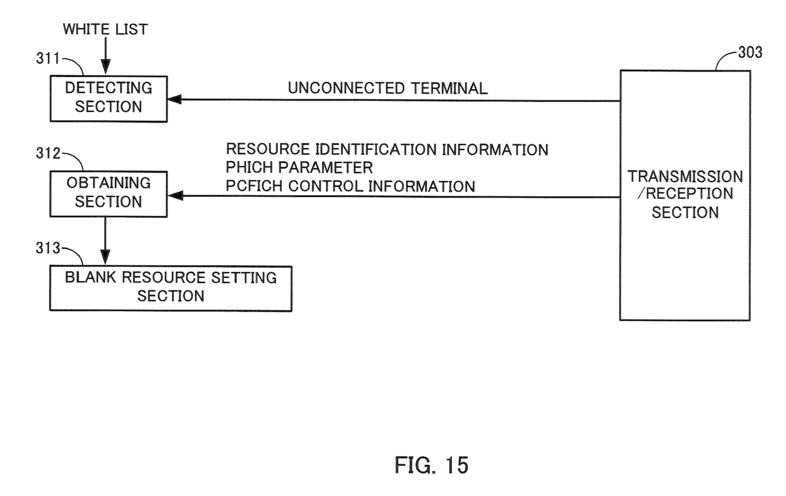

With reference to Fig. 15, description is made about functional blocks of the communication control processing by the room base station apparatus. Fig. 15 is a diagram for explaining the functional blocks of the communication control processing by the room base station apparatus. Each of the functional blocks in Fig. 15 represents processing performed mainly by the baseband processing section. Here, the functional blocks shown in Fig. 15 are simplified for explanation of the present invention, and it should be understood that the baseband processing section is equipped with standard parts.

As illustrated in Fig. 15, the room base station apparatus 30 has a detecting section 311, an obtaining section 312, a blank resource setting section 313 and a transmission/reception section 303. The detecting section 311 detects, with reference to the white list, the mobile terminal apparatus 10 which is notified of from the base station apparatus 20 and is not connected inside the serving cell. Here, instead of detecting the unconnected mobile terminal apparatus 10 inside the serving cell based on the notification from the base station apparatus 20, the detecting section 311 may be configured to add an unconnected terminal inside the serving cell by itself. The obtaining section 312 obtains the resource identification information for identifying a PDCCH resource of the mobile terminal apparatus 10, the PHICH parameter, PCFICH control information and the like from the notification from the base station apparatus 20. Instead of obtaining the resource identification information and the like by the notification from the base station apparatus 20, the obtaining section 312 may obtain the resource identification information and the like by receiving a radio signal from the base station apparatus 20.

The blank resource setting section 313 sets, for the virtual mobile terminal apparatus, the resource indicated by the resource identification information to a blank resource. Specifically, the blank resource setting section 313 calculates a CCE of the unregistered mobile terminal apparatus 10 before interleaving and sets the CCE of the virtual mobile terminal apparatus corresponding this CCE to be blank and performs interleaving. With this process, the blank resource is set in accordance with the PDCCH resource of the mobile terminal apparatus 10 in the base station apparatus 20 and interference with the mobile terminal apparatus 10 inside the femto cell C2 is prevented.

As described above, according to the room base station apparatus 30 according to the present embodiment, as the blank resource is set in consideration of the PDCCH resource in the base station apparatus 20, it is possible to prevent interference from the femto cell C2 when the mobile terminal apparatus 10 receives the PDCCH. In this way, it is possible to make the base station apparatus 20 and the room base station apparatus 30 perform control in an adaptive manner for interference within the heterogeneous network having the macro cell C1 and femto cell C2. Further, as the interference of the PDCCH can be prevented by settings to the base station apparatus 20 and the room base station apparatus 30, it is possible to use not only a LTE-A terminal but also an LTE terminal as the mobile terminal apparatus 10.

Here, the embodiment has been described above by way of example of the room base station apparatus covering a femto cell as a small cell. However, this structure is by no means limiting. The base station apparatus covering the small cell may be any base station apparatus as far as it can build the heterogeneous network together with a macro cell and may be a base station apparatus covering a pico cell or micro cell.

Further, the embodiment has been described above by way of example in which the base station apparatus of the small cell is configured to prevent interference with the downlink control channel of the unregistered mobile terminal apparatus inside the serving cell. However, this structure is by no means limiting. The base station apparatus of the small cell may have any configuration as far as it can prevent interference with the unconnected mobile terminal apparatus inside the serving cell and for example, it can prevent interference with a mobile terminal apparatus that does not meet connection conditions such as the number of apparatuses, apparatus type, apparatus performance and the like, or it can prevent interference with a mobile terminal apparatus unconnected by a connection failure.

Furthermore, the embodiment has been described above by way of example where the resource identification information includes the UE-ID, the number of resource elements, aggregation level and the number of candidates of PDCCH. However, the resource identification information is not limited to these information pieces. The resource identification information may be any information capable of identifying a resource or for example, address information of the resource.

Still furthermore, the embodiment has been described above by way of example where approach of the mobile terminal apparatus to the base station apparatus of a small-sized cell is detected by the base station apparatus of a large-sized cell receiving the measurement report from the mobile terminal apparatus. However, this structure is by no means limiting. The base station apparatus of the large-sized cell may have any structure as far as it can detect approach of the mobile terminal apparatus to the base station apparatus of the small-sized cell.

Still furthermore, the embodiment has been described above by way of example where the base station apparatus of the small-sized cell registers the virtual mobile terminal apparatus and sets a blank resource for this virtual mobile terminal apparatus. However, this structure is by no means limiting. The base station apparatus of the small cell maynot arrange the virtual mobile terminal apparatus as far as it can set the resource that can cause interference to the PDCCH of the unconnected mobile terminal apparatus in the serving cell to the blank resource.

The present invention is not limited to the above-described embodiment and may be embodied in various modified forms. For example, the number of processing sections and the processing procedure in the above description may be modified as appropriate without departing from the scope of the present invention. Other modifications may be also made as appropriate without departing from the scope of the present invention.

The disclosure of Japanese Patent Application No. 2010-141064, filed on June 21, 2010, including the specification, drawings, and abstract, is incorporated herein by reference in its entirety.

**Claims**

1.  A base station apparatus that covers a small cell and shares at least a part of frequency band with another base station apparatus that covers a large cell, the base station apparatus comprising:

    a detecting section configured to detect an unconnected mobile terminal apparatus in the small cell;
    an obtaining section configured to obtain resource identification information for identifying a resource of a downlink control channel for the unconnected mobile terminal apparatus in the other base station apparatus; and
    a blank resource setting section configured to set a resource identified by the resource identification information to be a blank resource.

2.  The base station apparatus of claim 1, wherein
    the small cell is a closed cell to which a specific mobile terminal apparatus is connectable,
    the detecting section detects, as the unconnected mobile terminal apparatus, a mobile terminal apparatus other than the specific mobile terminal apparatus in the small cell, and
    the blank resource setting section associates the unconnected mobile terminal apparatus with a virtual mobile terminal apparatus that is connected to the closed cell and sets a resource of a downlink control channel of the virtual mobile terminal apparatus to be the blank resource.

3.  The base station apparatus of claim 1, wherein the obtaining section obtains, as the resource identification information, a resource element candidate to be allocated to the downlink control channel of the unconnected mobile terminal apparatus.

4.  The base station apparatus of claim 1, wherein the obtaining section obtains, as the resource identification information, a terminal ID of the unconnected mobile terminal apparatus and a number of resource elements to be allocated to the downlink control channel.

5.  The base station apparatus of claim 4, wherein in addition to the terminal ID and the number of resource elements, the obtaining section obtains, as the resource identification information, at least one of an aggregation level and a number of resource allocation candidates to the downlink control channel.

6.  The base station apparatus of claim 1, wherein the obtaining section obtains either response resource identification information for identifying a resource for response to which a response signal to a signal received on an uplink in the other base station apparatus is allocated and a cell ID of the large cell.

7. The base station apparatus of claim 1, wherein the blank resource setting section sets the blank resource with use of a same interleaving pattern as that of the other base station apparatus.

8. The base station apparatus of claim 1, wherein the blank resource setting section arranges the blank resource in a transmission stream before being interleaved, with use of an interleaving pattern that is different from that of the other base station apparatus, in such a manner that a resource specified by the resource identification information is set to be the blank resource.

9. The base station apparatus of claim 1, wherein the obtaining section obtains at least a part of the resource identification information by a handover preparation signal given from the other base station apparatus.

10. A base station apparatus that covers a large cell and shares at least a part of frequency band with another base station apparatus that covers a small cell, the base station apparatus comprising:

a detecting section configured to detect, in the small cell, an unconnected mobile terminal apparatus that is not connected to the other base station apparatus; and
a transmission section configured to transmit, to the other base station apparatus, resource identification information for identifying a resource of a downlink control channel for the unconnected mobile terminal apparatus.

11. The base station apparatus of claim 10, wherein the small cell is a closed cell to which a specific mobile terminal apparatus is connectable, and the transmission section transmits the resource identification information to the other base station apparatus arranged in the closed cell.

12. The base station apparatus of claim 10, wherein the transmission section transmits, as the resource identification information, a resource element candidate to be allocated to the downlink control channel of the unconnected mobile terminal apparatus.

13. The base station apparatus of claim 10, wherein the transmission section transmits, as the resource identification information, a terminal ID of the unconnected mobile terminal apparatus and a number of resource elements to be allocated to the downlink control channel.

14. The base station apparatus of claim 13, wherein in addition to the terminal ID and the number of resource elements, the transmission section transmits, as the resource identification information, at least one of an aggregation level and a number of resource allocation candidates to the downlink control channel.

15. The base station apparatus of claim 10, wherein the transmission section transmits either response resource identification information for identifying a resource for response to which a response signal to a signal received on an uplink from the mobile terminal apparatus is allocated and a cell ID of the large cell.

16. The base station apparatus of claim 10, wherein the transmission section transmits, to the other base station apparatus a handover preparation signal containing at least a part of the resource identification information.

17. A mobile terminal apparatus connectable to a base station apparatus that covers a large cell and shares at least a part of a frequency band with another base station apparatus that covers a small cell, the mobile terminal apparatus comprising:

a transmission section configured to transmit, to the base station apparatus, no-connection information indicating that the mobile terminal apparatus is not connected to the other base station apparatus in the small cell, make the other base station apparatus obtain, from the base station apparatus, resource identification information for identifying a resource of a downlink control channel from the base station apparatus, and make the other base station apparatus set a resource identified by the resource identification information to be a blank resource; and
a reception section configured to receive downlink control information in the downlink control channel of the base station apparatus.

18. The mobile terminal apparatus of claim 17, wherein the small cell is a closed cell to which a specific mobile terminal apparatus is connectable, and the mobile terminal apparatus is not the specific mobile terminal apparatus.

19. The mobile terminal apparatus of claim 17, wherein by transmission of the no-connection information, the transmission section makes at least a part of the resource identification information contained in a handover preparation signal transmitted from the base station apparatus to the other base station apparatus.

**20.** A communication control method of a base station apparatus that covers a small cell and shares at least a part of a frequency band with another base station apparatus that covers a large cell, the communication control method comprising the steps of:

detecting an unconnected mobile terminal apparatus in the small cell;
obtaining resource identification information for identifying a resource of a downlink control channel for the unconnected mobile terminal apparatus in the other base station apparatus; and
setting a resource identified by the resource identification information to be a blank resource.

M1-M3 : MACRO UE
F : FEMTO UE
C1 : MACRO-CELL
C2 : FEMTO-CELL
eNB : EVOLVED NodeB
HeNB : HOME NodeB

INTENDED LINK

INTERFERING LINK

FIG. 1

CONTROL

DATA

CONTROL

DATA

FIG. 2

ONE SLOT

ONE SUBFRAME

MACRO

ONE RB

FEMTO

| | PCFICH | | PHICH | | OCCUPIED CC RE | | Data | | CRS |
| --- | --- | --- | --- | --- | --- | --- | --- | --- | --- |

| | PDCCH(M1) | | PDCCH(M2) | | PDCCH(M3) |

FIG. 3

EP 2 584 851 A1

14

M1-M3:MACRO UE
F: FEMTO UE
V: VIRTUAL UE
C1:MACRO-CELL
C2:FEMTO-CELL
eNB:EVOLVED NodeB
HeNB:HOME NodeB

→ INTENDED LINK

---▶ INTERFERING LINK

FIG. 4

FIG. 5

DCI (UE#1)  CRC (xUE-ID)

CHANEEL CODING + RATE MATCHING + QPSK MODULATION

DCI (UE#2)  DCI (UE#3)          DCI (UE#4)

CCE MULTIPLEXING

CCE#1 | CCE#2 | CCE#3 | CCE#4 | CCE#5 | CCE#6 | CCE#7 | CCE#8 | CCE#9

REG (RESOURCE ELEMENT GROUP)  CCE INTERLEAVING

MAPPING

FIG. 6A

DCI (UE#1)  CRC (xUE-ID)

CHANNEL CODING + RATE MATCHING + QPSK MODULATION

DCI (UE#2)  DCI (UE#3)          DCI (UE#4)

CCE MULTIPLEXING

CCE#1 | CCE#2 | CCE#3 | CCE#4 | CCE#5 | CCE#6 | CCE#7 | CCE#8 | CCE#9

REG (RESOURCE ELEMENT GROUP)  CCE INTERLEAVING

MAPPING

FIG.6B

FIG. 7

M1

20

30

| UE | eNB | HeNB |

S01

MEASUREMENT REPORT

S02

S03

M1

S04

S05

UE-ID (C-RNTI)
PCI
TOTAL NUMBER OF PDCCH
CCE AGGREGATION LEVEL (L)
PDCCH INDEX (m)
PHICH PARAMATER
PCFICH

S06

FIG. 8

M1

20

30

| UE | eNB | HeNB |

PCI

S11

S12

MEASUREMENT REPORT

S13

S14

HANDOVER PREPARATION REPORT
UE-ID (C-RNTI)

S15

S16

TOTAL NUMVER OF PDCCH
CCE AGGREGATION LEVEL (L)
PDCCH INDEX (m)
PHICH PARAMETER
PCFICH

S17

FIG. 9

FIG. 10

EP 2 584 851 A1

TRANSMISSION/
RECEPTION
ANTENNA

10

105
APPLICATION
SECTION

104
BASEBAND
SIGNAL
PROCESSING
SECTION

103
TRANSMISSION/
RECEPTION
SECTION

102
AMPLIFYING
SECTION

101

FIG. 11

FIG. 12

FIG. 13

FIG. 14

FIG. 15

EP 2 584 851 A1

<table>
<tr><td colspan="2"><b>INTERNATIONAL SEARCH REPORT</b></td><td>International application No.<br>PCT/JP2011/063810</td></tr>
</table>

A. CLASSIFICATION OF SUBJECT MATTER
*H04W72/04(2009.01)i, H04W84/10(2009.01)i, H04W92/20(2009.01)i*

According to International Patent Classification (IPC) or to both national classification and IPC

B. FIELDS SEARCHED

Minimum documentation searched (classification system followed by classification symbols)
H04W4/00-99/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | Huawei, LTE non-CA based HetNet support, 3GPP TSG RAN WG1 meeting #60bis, R1-101982, 3GPP, 2010.04.16, p.1-7 | 1-20 |
| A | Research In Motion, UK Limited, PDCCH Interference Management for Heterogeneous Network, 3GPP TSG RAN WG1 meeting #60, R1-101106, 3GPP, 2010.02.26, p.1-5 | 1-20 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 September, 2011 (13.09.11) | 20 September, 2011 (20.09.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

**Patent documents cited in the description**

- JP 2010141064 A

**Non-patent literature cited in the description**

- Feasibility study for Evolved UTRA and UTRAN. *3GPP, TR25.912,* September 2006